# EUROPEAN PATENT APPLICATION

(11) **EP 0 630 731 A1**
(43) Date of publication of application: **28.12.1994**
(21) Application number: 94304531.0
(22) Date of filing: 22.06.1994
(51) Int. Cl.: B29C 45/00

(54) **Method for molding a plastic article using a multi-point volume control system**

(30) Priority: 23.06.1993 US 82744
(71) Applicant: Hettinga, Siebolt, Des Moines Iowa 50325 (US)
(72) Inventor: Hettinga, Siebolt, Des Moines, Iowa 50325 (US); Anderson, Marty Lewis, Des Moines, Iowa 50322 (US)
(74) Representative: Singleton, Jeffrey

(57) **Abstract**

A method of molding a plastic article using a multi-point volume control system. By using low pressures to inject a plastic material through a plurality of gates into a mold cavity, the gates may be opened and closed sequentially as the product is being molded. A first gate is opened and then succeeding gates are opened sequentially as the plastic material passes over the gate. Preceding gates are closed soon after succeeding gates are opened to limit the number of gates open at any one time, thereby focusing the injection force on a minimum number of gates and increasing the pressure by which material is injected through any one gate. Through the use of this sequential injection method, knit lines may be eliminated thereby strengthening the finished article as well as eliminating the unaesthetic appeal of these lines. This method also allows easy venting of the mold cavity. Furthermore, because there are no points in the mold cavity where mold fronts meet one another, these areas, which formerly had to be vented, no longer require venting assemblies.

## Description

### Background of the Invention

The present invention relates generally to the injection molding of plastics and, more particularly, to a process for injection molding a plastic article wherein a multi-point volume control is used to evenly distribute plastic injection material into a mold cavity of a plastic injection mold unit.

Injection molding machines generally include a two section mold unit which, when brought together, forms a mold cavity in which a plastic article may be molded. Most typically, one of the mold sections is stationary and includes an end gate opening for the injection of a plastic material into the cavity. The other mold section is generally movable between an open position away from the stationary mold section and a closed position where the two mold sections are in sealed contact engagement to form the mold cavity.

The plastic material is generally plasticized until flowable and then injected into the mold cavity, through a sprue or opening in one of the mold sections, by means of a screw or similar injection apparatus. Huge clamps are generally required to apply tonnage to the movable mold section as the injection apparatus presses more and more plastic into the mold cavity. The huge clamp tonnage required in most injection molding procedures to keep the mold sections together consumes a large amount of energy while at the same time placing ever increasing wear upon the molding machine.

Most typically, material is injected into the mold through a single sprue or opening. For anything other than the molding of very small parts, however, the single sprue method requires extremely high pressures to force the material through the sprue and throughout every portion of the mold cavity. These extremely high pressures not only add to the cost of the injection molding process by requiring very large clamps and injection systems, but these pressures increase the wear on the molding machine. Because the pressure on the plastic first entering the mold is less than the plastic entering the mold last, the finished plastic article will have in-molded stress which could result in warpage of the final product.

Simultaneous injection of a material into a mold cavity through several sprues is well known in the art, but involves several problems. While simultaneous injection methods increase the points at which a mold cavity can be filled, thereby reducing the pressure which must be applied to the material to completely fill the mold cavity, these prior art methods produce "knit lines" which are aesthetically unappealing and reduce the strength of the finished plastic article.

Knit lines are produced when material is injected into a mold cavity through more than one inlet or sprue. As a plastic material is injected through a sprue, the material expands outward to fill various points of the cavity. The leading face of the material, typically called the melt face, continues to expand outward until it reaches a side of the mold cavity or another mold face expanding outward from an adjacent sprue. When material is injected through several sprues simultaneously, the points at which the mold faces of the injected material meet each other create interfaces or knit lines. These knit lines appear on the surface of the finished plastic article and create unaesthetic areas of weakness which run through the finished plastic article. Knit lines often lead to wrinkles in the face of the finished plastic article which limit the use of simultaneous sprue injection method for molding films or fabrics onto plastic articles.

Sprues are typically covered with gates which open to allow material to pass through the sprues and close to prevent material from passing through the sprues. Generally, all gates are opened simultaneously and thereafter closed simultaneously when the mold cavity is full. The sequential opening of gates which cover the sprues may reduce the formation of knit lines if the gates are opened only after the material expanding from a nearby gate has passed over the gate. Unfortunately, several problems have arisen in the implementation of such methods of sequential gate opening.

In typical injection molding, very large pressures on the order of 20,000 pounds per square inch are used. Sequentially closing gates under such extreme pressures often damages typical injection molding gates which are not designed to be closed against such high pressures. Conversely, when gates are opened simultaneously the pressure is spread evenly across all the gates, thereby reducing the amount of force on any single gate. Additionally, in simultaneous gate opening, the gates are generally not closed until the mold cavity is filled. When the mold cavity is filled, the plastic within the mold cavity exerts an outward force at each sprue which equalizes pressures on the sprue gate. Because an economical gate has yet to be developed which can withstand the intense pressure resulting from prior art sequential gate opening methods, sequential gate opening has been substantially abandoned in lieu of the simultaneous gate opening. Although simultaneously opening several gates decreases the pressure on any one gate, such simultaneous opening leads to the undesirable formation of knit lines and requires very high injection and clamp pressures to distribute a significant amount of force to every opening simultaneously.

The difficulties encountered and the prior art discussed hereinabove are substantially eliminated by the present invention.

### Advantages of the Invention

The present invention provides :-
1. a method for injection molding a plastic article wherein a multi-point injection apparatus is used to reduce injection pressure and clamp tonnage applied during the molding process.
2. a method for injection molding a plastic article wherein a multi-point injection apparatus is used to eliminate knit lines,
3. a method for injection molding a plastic article wherein a multi-point injection apparatus is used to mold a film or a fabric onto the plastic article without wrinkling or deforming the film or fabric,
4. a method for injection molding a plastic article wherein a multi-point injection apparatus is used to reduce molded-in stress and warpage in the finished plastic article,
5. a method for injection molding a plastic article wherein a multi-point injection apparatus is used to mold very large plastic parts,
6. a method for injection molding a plastic article wherein a multi-point injection apparatus is used to eliminate venting problems associated with knit lines,
7. a method for injection molding a plastic article wherein a multi-point injection apparatus is used to mold very thin walls into the finished plastic article.

These and other advantages of the present invention will become apparent upon reference to the following specification, drawings, and claims.

By the present invention, which is defined in the present claims, it is proposed to overcome the difficulties encountered heretofore. To this end, in one embodiment, a mold apparatus is provided including a first section and a second section opposite to an in mated alignment with the first section. The mold apparatus has a plurality of inlets for receiving a plastic material. The first mold section and second mold section are clamped together to form an injection mold cavity for the plastic article. A plastic material is injected through less than all of the inlets into the mold cavity. The plastic material is then injected into the mold cavity through at least one of the remaining inlets. The inlets are then closed and the plastic material is allowed to at least partially cool within the mold cavity. The resultant plastic article is then removed from the mold cavity.

In the preferred embodiment of the present invention the inlets are open sequentially with each succeeding inlet opening when the plastic material passing into the mold cavity passes over the succeeding inlet on the mold cavity side of the inlet. The inlets are closed in succession with each inlet closing soon after the succeeding inlet opens. In this manner plastic articles may be molded through sequential injection without knit lines.

### Brief Description of the Drawings

In the drawings:
Fig. 1 is an elevation of a plastic injection molding machine shown in partial cross-section and equipped with a plurality of inlets for injecting a plastic material into the mold cavity according to the method of the present invention;
Figs. 2a and 2b are a side and rear elevational view of the mold unit shown in cross-section with the first inlet opening and the plastic material entering the mold cavity therethrough;
Figs. 3a and 3b are a side and rear elevational view of the mold unit shown in cross-section with the first inlet open, the second inlet opening, and the melt face covering both the first and second inlets;
Figs. 4a and 4b are a side and rear elevational view of the mold unit shown in cross-section with the second inlet open and the first inlet closing;
Figs. 5a and 5b are a side and rear elevational view of the mold unit shown in cross-section with the first inlet closed, the second inlet open, and the third inlet opening after the melt face has passed the third inlet;
Figs. 6a and 6b are a side and rear elevational view of the mold unit shown in cross-section with the second inlet closed, the third inlet closing, and the fourth inlet open;
Figs. 7a and 7b are a side and rear elevational view of the mold unit shown in cross-section with only the fourth inlet open as the mold cavity fills with plastic material.

### Detailed Description of the Invention

A method of molding a plastic article without knit lines by placing a plastic material 10 into a hopper 12 of an injection molding machine 14 and thereafter injecting the material 10 through an injection barrel 16 into a runner 18 where the plastic material 10 is distributed to a series of mold cavity inlets 20-26. A first mold section 40 is moved along a mold frame 44 into a second mold section 42 to form a mold cavity 36 in which the plastic article will be formed. The mold cavity inlets 20-26 are located on the second mold section 42. Each inlet 20-26 is equipped with a gate 28-34 which opens and closes the inlet 20-26. Each gate 28-34 may be opened or closed independently of the other gates 28-34. As each gate 28-34 is opened, plastic material 10 passes through the inlets 20-26 and into the mold cavity 36. The gates 28-34 are opened and closed in a sequential manner so that as the plastic material 10 flows through the mold cavity 36 and across each gate 28-34 the gates 28-34 open as the plastic material 10 passes over them. After a succeeding gate 30-34 has opened, the gate 28-32 which was previously open closes.

Through sequential opening and closing of gates 28-34, plastic material 10 is injected into the mold cavity 36 without the formation of knit lines which would occur if the gates 28-34 were opened and closed simultaneously as is done in prior art methods. The absence of knit lines increases the aesthetic appeal and strength of the finished article. After the plastic article has at least partially hardened within the mold cavity 36, the first mold section 40 of the molding machine 14 is moved away from the second mold section 42 so that the plastic article may be removed.

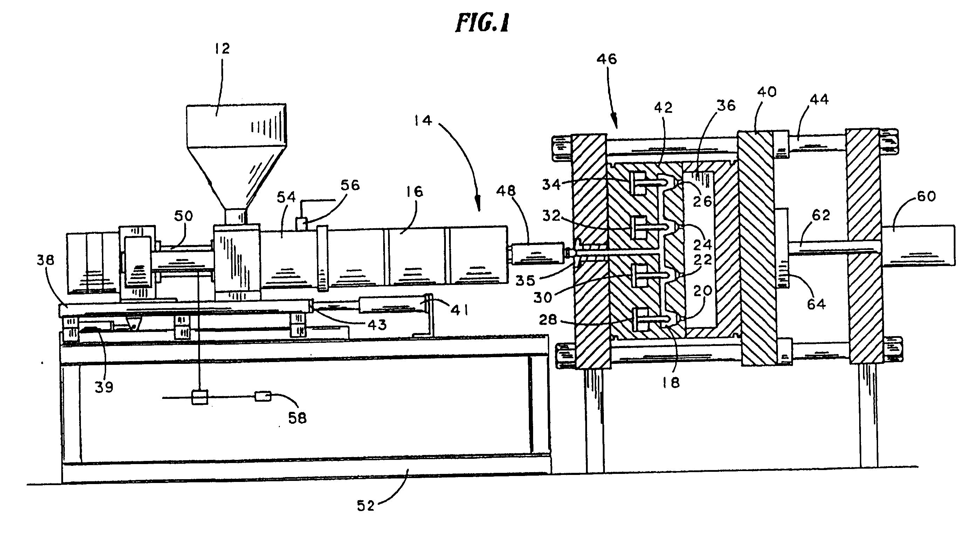

In the figures, there is shown a molding machine 14 with a main frame 52 having a mold unit 46 positioned adjacent one end of the main frame 52 (Fig. 1). A nozzle unit 48 is mounted at the forward end of an injection barrel 16 and a hopper 12 is mounted to the top of the injection barrel 16. A plastic material 10 is admitted into the barrel 16 from the hopper 12. Positioned concentrically within the barrel 16 is a reciprocating screw 50 with attached flights (not shown) for plasticizing and moving the plastic material 10 toward the injection barrel 16 and nozzle unit 48. A pair of cylinder assemblies 54 (only one shown) are arranged on opposite sides of the barrel 16 and operate to move the injection screw 50 relative to the barrel 16 during an injection operation. The cylinder assemblies 54 push the plastic material 10 into a mold cavity 36 formed by the first mold section 40 and the second mold section 42. The nozzle 48 is movable into and out of operative association with a mold cavity inlet 35 on a reciprocal movement of a carriage 38 relative to the main frame 52. This reciprocal movement is responsive to the operation of a double acting cylinder 39 pivotally interconnected between the carriage 38 and the main frame 52 and the operation of which is controlled by a linear transducer 41 mounted on the main frame 52 for coacting engagement with a limit member 43 on the carriage 38.

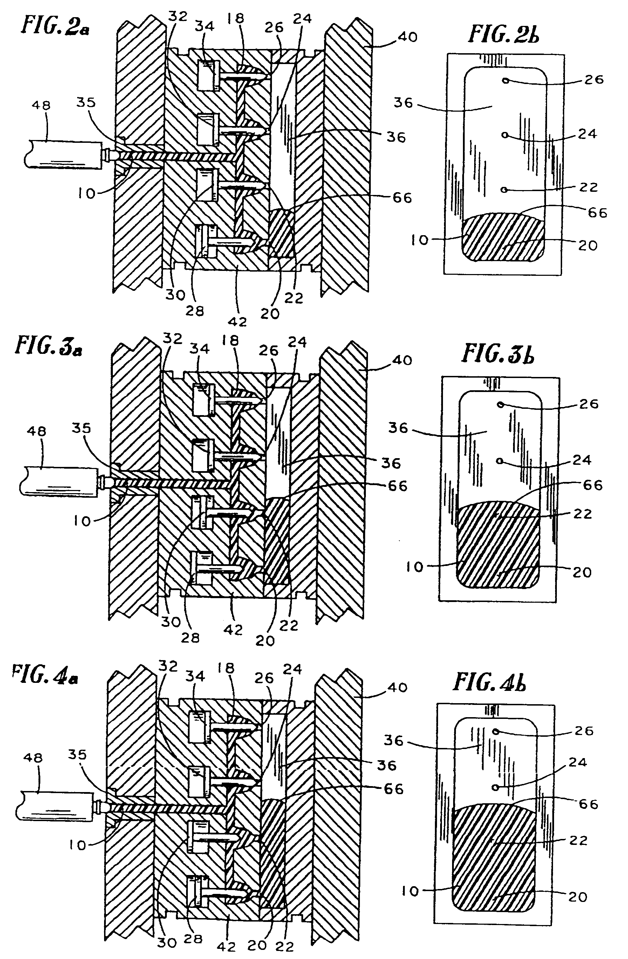

The plastic material 10 is added to the hopper 12 and the reciprocating screw 50 is rotated until the injection barrel 16 is filled with plastic material 10. As the plastic material 10 is pressed against the interior of the injection barrel 16, the resulting shear forces generate heat which acts to plasticize the plastic material 10 until the barrel 16 is full of plasticized plastic material 10. When the injection barrel 16 has been filled, the screw 50 stops rotating and the cylinder assemblies 54 push the plasticized plastic material 10 from the injection barrel 16, through the nozzle unit 48 and into a runner 18 positioned within the interior of the second mold section 42. In the preferred embodiment of the present invention, the runner 18 is a hollow cylindrical tube through which plastic material 10 travels from the nozzle unit 48 to the injection inlets 20-26 (Fig. 2a). The runner 18 is provided to distribute the plasticized plastic material 10 evenly across the several injection inlets 20-26. Each inlet 20-26 is provided with a gate 28-34 which independently controls the flow of plastic material 10 through each inlet 20-26 into the mold cavity 36.

When the runner 18 has completely filled with plasticized plastic material 10, the first gate 28 is retracted to allow the plastic material 10 to enter the mold cavity 36 through the first inlet 20 (Figs. 2a-b). The remaining gates 30-34 are opened and closed sequentially so that plastic material 10 flows into the mold cavity 36 through each remaining inlet 22-26 only after the plastic material 10 has covered the inlet 22-26 as the material 10 expands through the mold cavity 36. Similarly the inlets 20-26 are closed sequentially after the subsequent inlet 22-26 is opened. By closing the inlets 20-26 sequentially, pressure through any single inlet 20-26 can be maximized thereby reducing the injection pressure and clamping force required to inject the plastic material 10 into the mold cavity 36.

Because it is difficult to monitor the progress of the plastic material 10 through the mold cavity 36 directly, various methods can be employed to monitor the progress of the outer edge or melt front 66 of the plastic material (Figs. 3a and 3b). In the preferred embodiment of the present invention, the progress of the melt front 66 is indirectly monitored by a small linear actuator 58 attached to the reciprocating screw 50 (Fig. 1). By measuring the distance that the screw 50 has traveled, and knowing the volume of the shot chamber, the volume of plastic material 10 which has been injected into the mold cavity can be determined 36 and, consequently, the position of the melt front 66 within the mold cavity 36. Once the position of the melt front 66 has been determined, the sequence of gate openings and closings is orchestrated as previously described.

In an alternative embodiment of the present invention, the injection pressure supplied by the cylinder assemblies 54 is monitored by a pressure sensor 56 and the position of the melt front 65 within the mold cavity 36 determined by calculating the amount of pressure applied to push the material 10 through specific gates 28-34 at a specific time. When the pressure, measured by a pressure monitor 56 connected to the injection screw 50, has reached a predetermined value, a gate or gates 28-34 are opened or closed in response thereto. In yet another alternative embodiment of the present invention, the gates 28-34 are opened and closed in response to a predetermined amount of time passage from the time the cylinder assemblies 54 first begins pushing the plastic material 10 through the injection barrel 16, or in response to a predetermined amount of time passage from the time another gate or gates 28-34 opened or closed. Similarly, a rate or pressure monitor (now shown) may be operably connected to the injection barrel 16 to indirectly calculate the position of the melt front 66 in the mold cavity 36.

To avoid damaging the gates 28-34 by closing the gates 28-34 as pressure is being applied to the plastic material 10, low injection pressures are used throughout the molding process. In the preferred embodiment, the injection pressure is 3000 psi. Because several inlets 20-26 are used to distribute the plastic material throughout the mold cavity 36, large injection pressures are not required. Similarly, large clamp tonnages are not required to hold the mold sections 40 and 42 together against the injection pressure. The elimination of these two requirements allow smaller clamping and injection assemblies to be used which decreases the cost and weight of the injection molding machine.

According to the method of the present invention, the first mold section 40 is moved along a mold frame 44 and clamped into engagement with the second mold section 42 by a hydraulic clamp 60 thereby forming a mold cavity 36 (Fig. 1). In the preferred embodiment a ram 62 connects the clamp 60 to a platen 64 which is secured to the first mold section 40 to more evenly distribute the force of the clamp 60 across the first mold section 40. Plastic material 10 is deposited into the hopper 12 and the reciprocating screw 50 is revolved to plasticize the plastic material 10 and to transfer the material from the hopper 12 to the injection barrel 16. When the injection barrel 16 is filled with plasticized plastic material 10, the cylinder assemblies 54 push the reciprocating screw 50 toward the nozzle unit 48. The plasticized plastic material 10 is thereby transferred from the injection barrel 16 into the runner 18. The runner 18 distributes the plastic material 10 to each inlet 20-26. When the runner 18 and inlets 20-26 are full of plastic material 10, the first gate 28 located on the first inlet 20 is opened to allow the plastic material 10 to enter the mold cavity 36 through the first inlet 20 (Figs. 2a-b).

As the plastic material 10 enters the mold section through the first inlet, the plastic material 10 spreads outward and away from the inlet 20 concentrically until the edge of the expanding plastic material 10 or melt front 66 reaches the edges of the mold cavity 36 (Figs. 2a-b). The melt front 66 then moves toward the second inlet 22. After the melt front 66 has expanded within the mold cavity 36 across the second inlet 22, the second gate 30 attached to the second inlet 22 is opened thereby allowing plastic material 10 to enter the mold cavity 36 through the second inlet 22 (Figs. 3a-b). The plastic material 10 entering the mold cavity 36 from the second inlet 22 combines with the material 10 already passing through the mold cavity 36 to push the melt front 66 toward the third inlet 24.

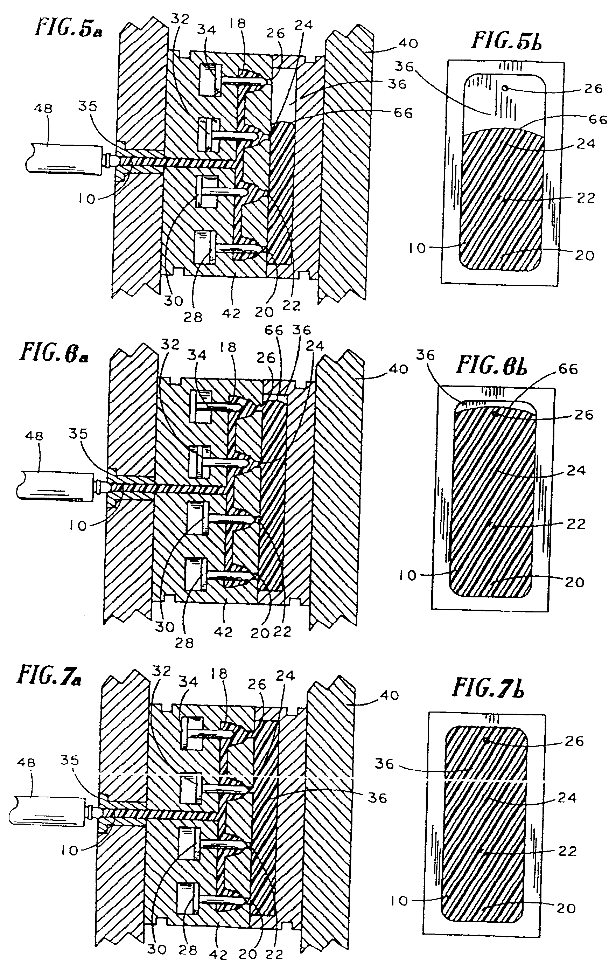

Although both the first inlet 20 and the second inlet 22 are simultaneously open for a short time, the first gate 28 on the first inlet 20 is closed shortly after the second gate 30 is opened (Figs. 3a-b and 4a-b). The melt front 66 continues across the third inlet 24 whereafter the third gate 32 is opened and the second gate 30 is closed (Figs. 5a-b and 6a-b). The melt front 66 continues across the mold cavity 36 and after covering the fourth inlet 26 the fourth gate 34 is opened (Figs. 6a-b). The third gate 32 is then closed leaving only the fourth inlet 26 through which plastic material 10 may be injected into the mold cavity (Figs. 7a-b). Plastic material 10 continues to be injected through the fourth inlet 26 by the cylinder assemblies 54 until the mold cavity 36 is completely filled. The fourth inlet 26 is then closed.

In the prior art method of multi-inlet injection molding, all of the inlets are opened simultaneously, allowing the plastic material to enter the mold cavity through a plurality of inlets. As the material enters the mold cavity, the material spreads through the mold cavity concentrically from each inlet. The concentrically expanding melt fronts continue outward until the fronts meet with the sides of the mold cavity or with a similar front expanding from another inlet. When two melt fronts meet, they do not combine fluidly, but form a knit or knit line along the plane where the melt fronts meet. These knit lines are visible in the finished article and leave aesthetically unappealing opaque swirls through the finished plastic articles along the line where the melt fronts met. Additionally, such knit lines represent a plane of weakness and in-molded stress which leaves the portion of the plastic material along the knit line more susceptible to failure and breakage than the rest of the finished article.

Another problem with the prior art method of multi-inlet plastic injection is that because several melt faces meet simultaneously, air remaining within the mold cavity must be vented from each point where the melt fronts meet one another. The problem of venting these multiple areas simultaneously requires more complicated machinery and higher tooling costs to provide a mold which will vent properly given the numerous points where melt fronts meet.

Conversely, in the method of the present invention there are no meeting of melt fronts because succeeding gates are not opened until the melt front has passed the opening of the inlet. Once the melt front has passed a succeeding inlet, the succeeding gate is opened and plastic material 10 is injected directly into the plastic material 10 passing through the mold cavity 36. The plastic material 10 passing from the succeeding gate passes directly into the plastic material 10 passing through the mold cavity 36 without contacting any air within the mold cavity 36. The plastic material 10 entering the mold cavity 36 from the succeeding inlet is thereby prevented from forming a melt front which would require venting as the front contacted another melt front.

In addition to knit lines and venting problems, the meeting of melt fronts often creates wrinkles in the surface of the finished plastic articles. This wrinkling limits the use of prior art multiple inlet injection apparatuses for molding films or fabrics directly to the surface of the articles. The wrinkling not only leads to an unaesthetic appearance of the film or fabric, but often leaves the film or fabric unsecurely attached to the plastic article.

To decrease the amount of pressure required to push the plastic material 10 into the mold cavity 36, the gates 28-34 on the inlets 20-26 are closed soon after succeeding gates are opened. By this method, a minimum number of inlets are injecting plastic material 10 into the mold cavity 36 at any given time, thereby allowing all the force of the linear actuator 54 to be concentrated on a minimum number of inlets. By this method, a sequential or cascading effect is achieved whereby plastic material 10 from the injection barrel 16 is injected into the mold cavity 36 at points just behind the expanding melt front 64. By injecting material directly behind the melt front 64, a great energy savings is achieved because the material need not be injected from a single outlet on one side of a mold cavity 36 to the opposite side of the mold cavity 36. By the present method, the plastic material 10 need merely be pushed from one inlet to a succeeding inlet whereafter the material is pushed from the succeeding inlet to yet another succeeding inlet until the mold cavity 36 is filled.

When the mold cavity 36 is completely filled, all of the gates 28-34 are closed and the plastic material 10 is allowed to at least partially harden within the mold cavity 36. The first mold section 40 is then moved away from the second mold section 42 along the main frame 44 whereafter the finished plastic article 38 is removed from the mold unit 46.

It has traditionally been very difficult to mold very large or thin-walled parts without knit lines because the pressure required to inject a plastic material through a single inlet to all portions of a large mold cavity or across a very narrow portion of mold cavity has required the use of very large injection machines and mold clamps. By the present invention the pressure requirements are reduced because the plastic material may be injected at various points around the mold instead of having to be forced from one end of the mold cavity to the other. The size and cost of the injection and clamping apparatuses can therefore be reduced without producing knit lines in the finished product.

Furthermore, the prior art methods of using extreme pressures to force the plastic material over a large area create a pressure gradient across the plastic material. In the prior art, the material injected into the mold cavity last is subjected to much greater pressures than the material injected into the cavity first because the material injected last must push the rest of the material to the perimeter of the mold. This pressure differential creates a pressure gradient across the material which may lead to molded-in stress and warpage in the final product. The molded-in stress and warpage are virtually eliminated by the present invention because the distances across which the plastic material must be forced are substantially reduced.

The foregoing description and drawings merely explain and illustrate the invention and the invention is not limited thereto, except insofar as the claims are so limited, as those skilled in the art who have the disclosure before them will be able to make modifications and variations therein without departing from the scope of the invention. For example, it is contemplated that more or less than four inlets may be used and that the inlets need not be positioned in a linear array, but may instead be positioned at advantageous points around the mold cavity 36. It is further contemplated that more than two inlets may be opened at any one time and that injection may begin anywhere in the mold cavity as the present invention is not limited to injection on one side of a mold cavity expanding to the opposite side of the cavity.

## Claims

1. A method of injection molding for forming a plastic article, said process comprising:
a) providing a mold apparatus, including a first section and a second section opposite to and in mated alignment with said first section, said mold apparatus further having a plurality of inlets for receiving a plastic material;
b) clamping said first mold section and said second mold section together to form an injection mold cavity for said plastic article;
c) injecting a plastic material through less than all of said inlets into said mold cavity;
d) injecting said plastic material into said mold cavity through at least one of said remaining inlets;
e) closing said injection inlets;
f) allowing said plastic material to at least partially cool within said mold cavity; and
g) removing said resultant plastic article from said mold cavity.

2. The method, according to claim 1, wherein said plurality of inlets includes a first inlet and a second inlet.

3. The method, according to claim 2, wherein first inlet includes a first set of inlets and wherein said second inlet includes a second set of inlets.

4. The method, according to claim 2 or 3, wherein said first inlet and said second inlet have an injection side and a mold side, and wherein said injection material is not injected through said second inlet until at least a portion of said plastic material has travelled over said mold side of said second inlet.

5. The method, according to any of claims 2 to 4, wherein said plastic material is injected through said second inlet after a predetermined amount of time has passed since said injection of said plastic material through said first inlet.

6. The method, according to any of claims 2 to 4, wherein said plastic material is injected through said second inlet after the pressure required to inject said plastic material through said first inlet has reached a predetermined pressure.

7. The method, according to any of the preceding claims, and further comprising providing an injection means to inject said plastic material into said mold cavity, said injection means being provided with a pressure monitor to monitor the force required to inject said plastic material into said mold cavity.

8. The method, according to any of claims 2 to 6, and claims 7 when appended to claim 2, wherein said plastic material is injected through said second inlet after a predetermined volume of plastic material has been injected into said mold cavity through said first set of inlets.

9. The method, according to claim 8, further comprising providing an injection barrel through which said plastic material is pushed toward said first inlet, said injection barrel being fitted with a linear actuator to determine what volume of said plastic material has passed out of said injection barrel through said first inlet.

10. The method, according to any of claims 2 to 6, 8 and 9, and claim 7 when appended to claim 2, further comprising providing a runner to supply said plastic material to said first inlet and said second inlet.

11. A method of injection molding for forming a plastic article, said process comprising :
a) providing a mold apparatus, including a first section and a second section opposite to and in mated alignment with said first section, said mold apparatus further including a plurality of inlets for receiving an injection material, said plurality including at least a first inlet and a second inlet;
b) clamping said first mold section and said second mold section together to form an injection mold cavity for said plastic article;
c) providing an injection means for injecting a plastic material into said mold cavity;
d) providing a runner system operably connecting said injection means with said plurality of inlets;
e) providing a gating means for individually opening and closing of said first inlet and said second inlet;
f) opening said first inlet;
g) injecting said plastic material through said first inlet into said mold cavity;
h) monitoring said plastic material as said plastic material moves away from said first inlet and fills said mold cavity;
i) opening said second inlet after said plastic material has expanded said second inlet;
j) injecting said plastic material through said second inlet into said mold cavity;
k) closing said first inlet;
l) closing said second inlet;
m) allowing said plastic material to at least partially harden within said mold cavity; and
n) removing the finished plastic article from said mold cavity.

12. The method, according to claim 11, further comprising the steps of:
a) opening remaining inlets in succession after said plastic material has expanded over said remaining inlets;
b) closing said remaining inlets after said plastic material has expanded over a succeeding inlet and said succeeding inlet has been opened; and
c) closing said plurality of inlets when said mold cavity is filled with said plastic material.

13. The method, according to claim 11 or 12, wherein said plastic material is injected through said second inlet after a predetermined amount of time has passed since said injection of said plastic material through said first inlet.

14. The method, according to claim 12, wherein said plastic material is injected through said second inlet after the pressure required to inject said plastic material through said first inlet has reached a predetermined pressure.

15. The method, according to claim 14, further comprising providing an injection means to inject said plastic material into said mold cavity, said injection means being provided with a pressure monitor to monitor the force required to inject said plastic material into said mold cavity.

16. The method, according to any of claims 11 to 15, wherein said plastic material is injected through said second inlet after a predetermined volume of plastic material has been injected into said mold cavity through said first inlet.

17. The method, according to claim 16, further comprising providing an injection barrel through which said plastic material is pushed toward said first inlet, said injection barrel being fitted with a linear actuator to determine the volume of said plastic material passing out of said injection barrel through said first inlet.
